# FASCICULE DE BREVET EUROPEEN

(11) **EP 3 060 437 B1**
(45) Date de publication et mention de la délivrance du brevet: **10.10.2018**
(21) Numéro de dépôt: 14832381.9
(22) Date de dépôt: 31.07.2014
(51) Int. Cl.: B60R 22/32

(54) **DISPOSITIF DE DECOUPE D'UNE CEINTURE**
SCHNEIDVORRICHTUNG FÜR EIN SICHERHEITSGURT
DEVICE FOR CUTTING A SAFETY BELT

(30) Priorité: 31.07.2013 FR 1357557
(43) Date de publication de la demande: 31.08.2016
(73) Titulaire: Aguila Technologie, 64210 Bidart (FR); Avantix, 13794 Aix-en-Provence (FR)
(72) Inventeur: FLEGAR, Matthias, F-64100 Bayonne (FR); DARDINIER, Laurent, F-64210 Ahetze (FR)
(74) Mandataire: A.P.I. Conseil
(86) Numéro de dépôt international: PCT/FR2014/051996
(87) Numéro de publication internationale: WO 2015/015125

(56) Documents cités:
- WO-A2-2013/043066
- DE-A1- 3 220 133
- DE-A1-102005 032 856
- JP-A- S5 461 727
- US-A1- 2013 014 622

## Description

La présente invention est relative à un dispositif permettant de découper une ceinture de sécurité dans un véhicule afin de permettre au passager ceinturé de se libérer et de quitter le véhicule en cas d'urgence.

Le document US2013014622 A1 divulgue un dispositif d'après le préambule de la revendication 1 et un procédé d'après le préambule de la revendication 14. Les véhicules personnels ainsi que certains véhicules de transport en commun sont équipés de ceintures de sécurité permettant d'éviter que les corps des passagers soient projetés au travers des vitres du véhicule, contre la planche de bord ou contre des sièges, lors d'un accident comme une sortie de route ou une collision avec un autre véhicule.

Théoriquement, après un accident et dans la mesure où il est encore conscient et qu'il n'est pas sérieusement blessé, chaque passager peut se libérer lui-même de sa ceinture de sécurité en détachant la boucle de cette ceinture de son attache, l'attache comprenant un poussoir qui permet de libérer la boucle lorsqu'il est enfoncé.

Toutefois, plusieurs éléments sont susceptibles d'empêcher le passager de se libérer facilement et rapidement de sa ceinture.

Par exemple, la plupart des ceintures de sécurité sont désormais équipées de préhenseurs permettant de tirer en arrière l'attache de la ceinture de sécurité lors d'un choc, ceci afin de tendre la ceinture et de plaquer le corps du passager sur son siège.

Ces préhenseurs, situés entre l'attache de la ceinture et le point d'ancrage de cette attache au châssis du véhicule, exercent un effort de traction sur la ceinture, même après leur déclenchement.

Et, cet effort de traction résiduel crée un effort s'opposant au mouvement d'enfoncement du poussoir, empêchant ainsi le passager de se libérer facilement, surtout si ce dernier est affaibli par la violence du choc.

Parallèlement, les autres éléments de sécurité du véhicule, comme les airbags, ou certaines parties ou certains équipements du véhicule déformés ou déplacés à cause du choc peuvent gêner les mouvements du passager et l'accès au poussoir de l'attache.

Enfin, suite à un accident, certains passagers, paniqués ou affaiblis par le choc, peuvent mettre un long moment à parvenir à se libérer eux-mêmes de leur ceinture à l'aide du poussoir conventionnel.

Aussi, différents dispositifs ont été imaginés pour permettre aux passagers de se libérer facilement et rapidement après un choc ou un accident.

Le document EP-0561355 prévoit un dispositif de découpe simple, placé sur la ceinture de sécurité et actionné par le passager.

Plus en détails, ce dispositif de découpe comprend deux parties clipsées sur la ceinture de sécurité et à l'intérieur desquelles coulisse une lame, la translation de la lame entraînant la découpe de la ceinture étant obtenue lorsque le passager tire sur le dispositif par l'intermédiaire d'un anneau de préhension prévu à l'extrémité du dispositif opposée à celle équipée de la lame.

Bien que très simple d'utilisation, ce dispositif de découpe nécessite néanmoins une prise de décision et une action du passager.

De plus, une ceinture de sécurité étant conçue pour résister à des efforts de traction de plusieurs tonnes, la découpe manuelle de la ceinture peut réclamer un effort trop important pour certains passagers, affaiblis ou devenus incapables à la suite de l'accident.

Le document WO-2013/043066 décrit un dispositif de découpe ne nécessitant pas d'effort de la part du passager.

Selon ce document, le dispositif de découpe prend la forme d'un corps cylindrique avec un logement intérieur dans lequel une lame est montée coulissante, le corps cylindrique comprenant en outre deux fentes pour le passage de la ceinture.

Avantageusement, la lame est entraînée en translation pour découper la ceinture grâce à une charge explosive ou à une génération de gaz déclenchée à distance par un signal électrique issu de l'électronique du véhicule, de préférence lorsque le véhicule est enfin immobile après un choc et au bout d'un certain temps après l'impact.

Un inconvénient du dispositif de découpe décrit dans ce document WO-2013/043066 réside dans l'utilisation d'une charge explosive ou d'un générateur de gaz pour l'entrainement en translation de la lame.

D'une part, ces moyens d'entrainement peuvent se révéler dangereux pour les passagers du véhicule accidenté.

D'autre part, le fonctionnement chimique de ces moyens d'entrainement peut s'altérer dans le temps, ce qui nuit à la qualité et à la fiabilité de la découpe.

Enfin, l'utilisation de ces moyens nécessite une conception renforcée, et donc coûteuse, du corps du dispositif car la lame doit être arrêtée en translation alors que l'augmentation de pression la propulse à grande vitesse et avec une forte accélération.

La présente invention vise à pallier les inconvénients de l'art antérieur.

A cet effet, la présente invention a pour objet un dispositif de découpe d'une ceinture de sécurité, le dispositif de découpe comprenant un boitier, un passage traversant ce boitier et permettant de monter le dispositif de découpe sur la ceinture à découper, et des moyens de découpe de la ceinture situés à l'intérieur du boitier.

Selon l'invention, le dispositif de découpe se caractérise en ce que les moyens de découpe comprennent un fil et des moyens de chauffage de ce fil.

Grâce à cette conception, les moyens de découpe du dispositif de découpe selon l'invention sont moins dangereux pour le passager ceinturé que des moyens de découpe à entrainement par charge explosive ou dégagement gazeux.

De plus, l'utilisation d'un fil chaud améliore la qualité de la découpe effectuée par les moyens de découpe.

Du point de vue de leur fonctionnement, le fil étant de préférence chauffé par une alimentation électrique autonome, ces moyens de découpe offrent une meilleure fiabilité que les moyens à fonctionnement chimique.

Enfin, cette conception avec un fil chaud ne nécessite pas un boitier renforcé mécaniquement et s'avère moins couteuse.

Parallèlement, l'invention couvre aussi une ceinture de sécurité équipée de ce dispositif de découpe, ainsi qu'un procédé de découpe d'une ceinture de sécurité consistant à utiliser un fil et des moyens de chauffage de ce fil afin de découper cette ceinture avec le fil chauffé.

D'autres caractéristiques et avantages ressortiront de la description qui va suivre de l'invention, description donnée à titre d'exemple uniquement, en regard des dessins annexés sur lesquels :
- la figure 1 représente une vue de côté d'un habitacle de véhicule dans lequel une ceinture de sécurité est équipée d'un dispositif de découpe selon l'invention,
- la figure 2 représente une vue en perspective d'un dispositif de découpe selon l'invention,
- la figure 3 représente une vue en perspective des moyens de découpe et de la demi-partie inférieure du boitier d'un dispositif de découpe selon l'invention,
- les figures 4 et 5 représentent des vues en coupe des moyens de découpe d'un dispositif de découpe selon, respectivement avec le fil des moyens de découpe dans son état passif et dans son état actif, et
- la figure 6 représente une vue en perspective des moyens de découpe et de la demi-partie supérieure du boitier d'un dispositif de découpe selon l'invention.

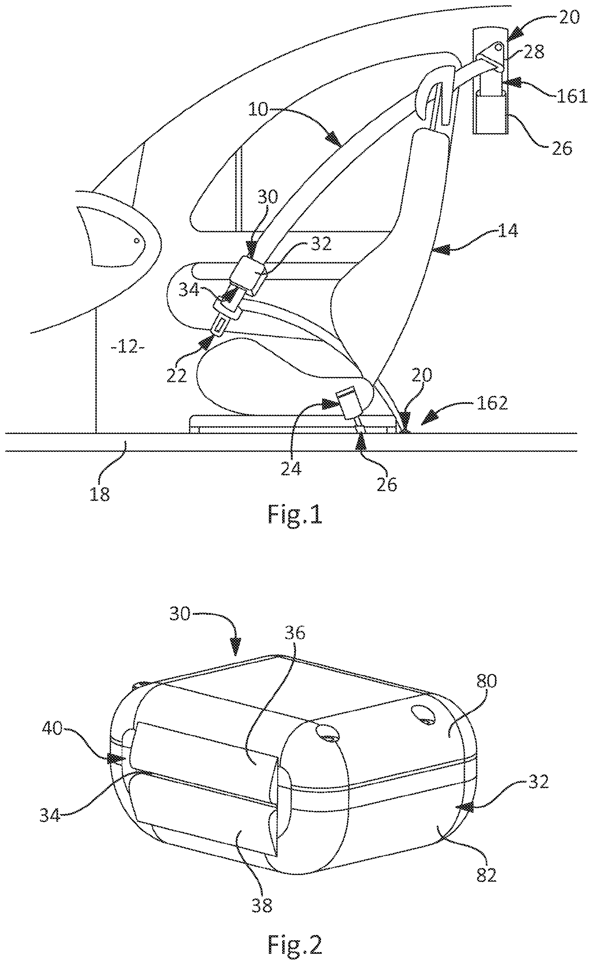

Comme illustré en figure 1, la présente invention est relative à la découpe d'une ceinture de sécurité 10 prévue dans l'habitacle 12 d'un véhicule afin d'éviter à un passager d'être projeté hors de son siège 14 lors d'un choc, ce choc étant par exemple dû à un accident ou à une sortie de route.

De façon connue, et selon qu'il s'agit d'une ceinture dite deux points ou trois points, la ceinture de sécurité 10 comprend au moins une extrémité 161,162 reliée de manière fixe au châssis 18 du véhicule par l'intermédiaire d'un dispositif d'ancrage 20, et moins une boucle 22 reliée de manière amovible au châssis 18 du véhicule par l'intermédiaire d'une attache 24.

Cette attache 24 est aussi reliée de manière fixe au châssis 18 du véhicule par l'intermédiaire d'un dispositif d'ancrage 26.

Et, cette attache 24 comprend des moyens de retenue de la boucle 22 avec un poussoir permettant de relâcher la boucle 22.

Dans l'exemple représenté en figure 1, la ceinture 10 est de type trois points car elle comprend deux extrémités haute 161 et basse 162 reliées fixement au châssis 18 du véhicule, et la boucle 22 est montée coulissante entre ces deux extrémités 161,162 afin de pouvoir adapter la longueur de la ceinture 10 à la corpulence du passager.

Avantageusement, un enrouleur 26 et un passant 28, tous deux reliés fixement au châssis 18 du véhicule, peuvent être prévus entre la boucle 22 et l'extrémité haute 161 de la ceinture 10 de façon que la longueur de la ceinture 10 s'adapte automatiquement à la corpulence du passager.

Afin de libérer le passager de sa ceinture 10 de manière automatique après un choc, la présente invention prévoit un dispositif de découpe 30 de cette ceinture 10 de sécurité.

Comme l'illustre plus en détails la figure 2, ce dispositif de découpe 30 comprend un boitier 32, et un passage 34 traversant ce boitier 32.

Comme cela est visible en figure 1, le passage 34 traversant permet de monter le dispositif de découpe 30 sur la ceinture 10 à découper : la ceinture 10 passant dans le passage 34 traversant le boitier 32.

Avantageusement, le passage traversant 34 permet de monter le boîtier 32 de manière coulissante sur la ceinture 10. Ainsi, le dispositif de découpe 30 peut être déplacé par le passager vers une position sur la ceinture 10 dans laquelle il n'incommode pas son confort.

De préférence, le dispositif de découpe 30 est positionné entre la boucle 22 de la ceinture et une extrémité 161,162 de la ceinture 10 reliée de manière fixe au châssis 18 du véhicule. Ainsi, le dispositif de découpe 30 peut être positionné à proximité de la boucle 22 de la ceinture 10 et de manière à venir en appui sur le siège 14 et non sur le passager.

Avantageusement, et particulièrement dans le cas où une extrémité 161,162 de la ceinture 10 est reliée au châssis 18 du véhicule par l'intermédiaire d'un enrouleur 26, le dispositif de découpe 30 comprend des joints supérieur 36 et inférieur 38 de protection de l'entrée 40 du passage traversant 34. Ces joints 36,38, visibles en figure 2, amortissent les chocs du boitier 32 contre l'enrouleur 26 ou le passant 28 lors de chaque enroulement de la ceinture 10 dans l'enrouleur 26, c'est-à-dire chaque fois que le passager quitte le véhicule.

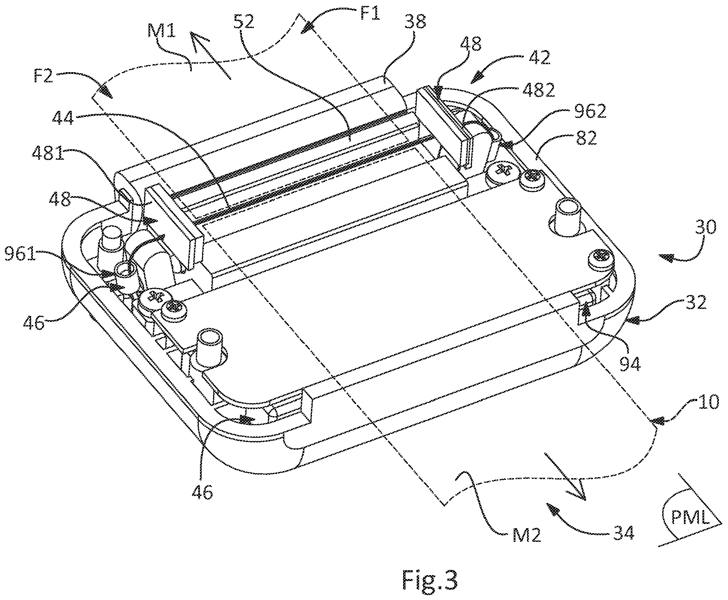

Selon l'invention, et comme l'illustrent les figures 3, 4 et 5, le dispositif de découpe 30 comprend des moyens de découpe 42 de la ceinture 10 situés à l'intérieur I du boitier 32.

En étant placés à l'intérieur I du boitier 32, les moyens de découpe 42 ne sont pas accessibles et ils ne peuvent pas venir blesser le passager ou avoir des effets négatifs sur la sécurité du véhicule.

Selon une caractéristique importante de l'invention, les moyens de découpe 42 comprennent un fil 44 et des moyens de chauffage 46 de ce fil.

De manière générale, la présente invention couvre un procédé de découpe d'une ceinture de sécurité 10 dans lequel un fil 44 est utilisé lorsqu'il est chaud afin de découper la ceinture 10 à l'intérieur I d'un boitier 32.

Selon ce procédé de découpe, le fil 44 et les moyens de chauffage 46 de ce fil sont utilisés afin de découper la ceinture 10 avec le fil 44 chauffé.

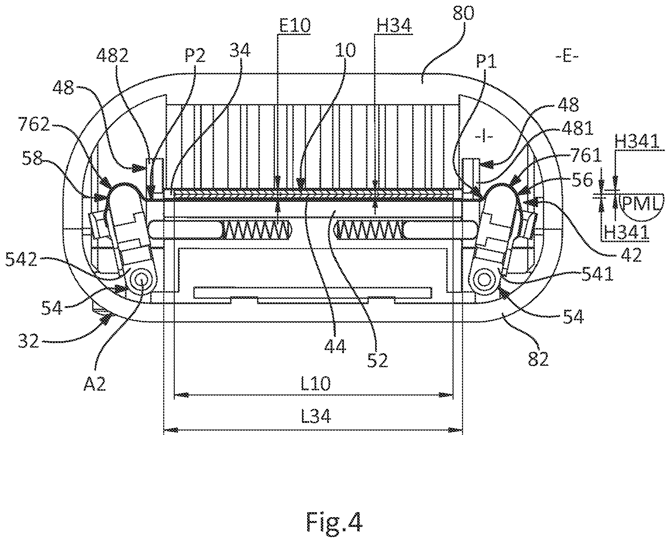

Comme illustré en figure 4, le fil 44 prend un état passif dans lequel le fil 44 est éloigné de la ceinture 10.

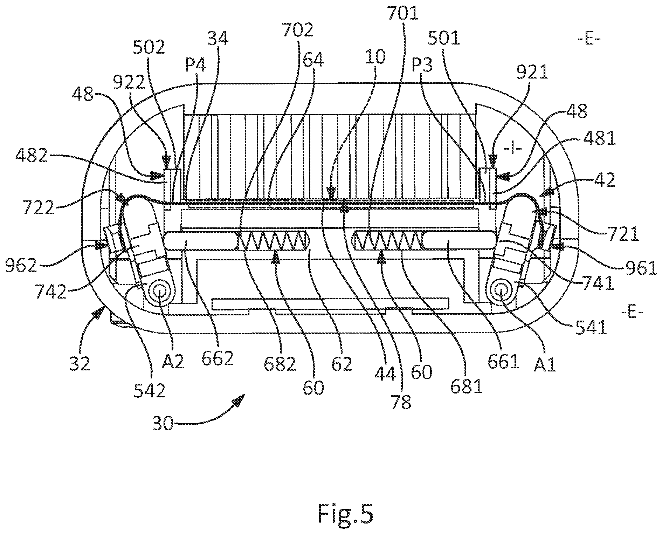

Et, comme illustré en figures 3 et 5, le fil 44 prend aussi un état actif dans lequel le fil 44 est chauffé par les moyens de chauffage 46 et en contact avec la ceinture 10 afin de la découper. Donc, le fil 44 est par défaut dans son état passif, et il ne passe dans son état actif que lorsque la ceinture 10 doit être découpée après un choc, et de préférence après avoir laissé s'écouler un certain laps de temps après que le véhicule se soit immobilisé.

Dans un mode de réalisation préféré des moyens de découpe 42, l'état actif du fil 44 correspond à une position active prise par le fil 44, illustrée en figures 3 et 5, et différente d'une position passive, illustrée en figure 4, prise par le fil 44 et correspondant à l'état passif de ce fil 44.

Aussi, et toujours dans un mode de réalisation préféré des moyens de découpe 42, le fil 44 est maintenu dans sa position passive par au moins un élément thermofusible 48, et le fil 44 passe de sa position passive à sa position active lorsque ce fil 44 est chauffé et que le ou les élément(s) thermofusible(s) 48 fond(ent) au moins en partie sous l'effet de la chaleur du fil 44.

Plus en détails, le fil 44 se déplaçant vers la ceinture 10 lorsqu'il passe de sa position passive à sa position active, au moins un élément thermofusible 48 vient en appui contre le fil 44 de manière à tenir ce fil 44 éloigné de la ceinture 10 lorsque cet(ces) élément(s) thermofusible(s) 48 n'est(ne sont) pas fondu(s), et ce(ces) élément(s) thermofusible(s) 48 libérant le fil 44 de manière à ce que le fil 44 se déplace vers la ceinture 10 lorsque cet(ces) élément(s) thermofusible(s) 48 fond(ent) au moins en partie.

Dans un mode de réalisation préféré de ces moyens thermofusibles d'appui sur le fil 44, deux éléments thermofusibles 481,482 situés de part et d'autre du passage traversant 34 créent respectivement deux points d'appui P1,P2 sur le fil 44 permettant d'éloigner le fil 44 de la ceinture 10 lorsque ces deux éléments thermofusibles 481,482 ne sont pas fondus.

Dans la présente invention, le déplacement des moyens de découpe de la ceinture 10, à savoir le fil 44, de leur position passive à leur position active est donc simplement obtenu par l'aptitude des éléments thermofusibles 48,481,482 à fondre sous l'effet de la chaleur du fil 44.

Avantageusement, ces éléments thermofusibles de mise en mouvement du fil 44 offrent un fonctionnement fiable dans le temps, peu dangereux, et ne nécessitant pas une conception mécaniquement renforcée du boîtier 32 du dispositif de découpe 30.

En complément des éléments thermofusibles 48,481,482, et en vue de positionner le fil 44 lorsqu'il est chauffé dans la meilleure position active de découpe de la ceinture 10, les moyens de découpe 42 comprennent deux butées 501,502 situées de part et d'autre du passage traversant 34.

Ces deux butées 501,502 sont respectivement accolées aux éléments thermofusibles 481,482, et elles créent respectivement deux points d'appui P3,P4 sur le fil 44.

Le passage traversant 34 s'étendant parallèlement à un plan médian longitudinal PML du boîtier 32 et sur une hauteur H341 égale de part et d'autre de ce plan médian longitudinal PML, les deux points d'appui P3,P4 créés par les deux butées 501,502 permettent d'arrêter le déplacement du fil 44 de manière à maintenir sensiblement ce fil 44 dans le plan médian longitudinal PML du passage traversant 34.

De préférence, le dispositif de découpe 30 comprend à l'intérieur I du boitier 32 au moins un élément, tel un joint transversal 52 visible en figures 3 et 4, permettant de maintenir la ceinture 10 parallèle au plan médian longitudinal PML du boîtier 32 et de manière que l'épaisseur E10 de la ceinture s'étende de manière égale de part et d'autre de ce plan médian longitudinal PML.

Ainsi, lorsque les éléments thermofusibles 481,482 fondent et libèrent le fil 44, le fil 44 est sensiblement arrêté dans le plan médian longitudinal PML du boîtier 32 et donc au milieu de l'épaisseur E10 de la ceinture 10, ce qui améliore la qualité et la fiabilité de la coupe.

En vue de sa mise en mouvement de sa position passive vers sa position active, le fil 44 pourrait être réalisé dans un matériau élastique et déformable : le fil 44 étant disposé par rapport aux butées 501,502 de manière à ce que sa libération par la fusion, même partielle, des éléments thermofusibles 481,482 lui permette de revenir à la fois vers sa forme initiale et vers sa position active.

Cependant, dans un mode de réalisation préféré des moyens de découpe 42, le fil 44 est déplacé vers l'état actif, et donc vers sa position active, par au moins un tendeur 54 tirant sur une des extrémités 56,58 du fil.

Plus précisément, le tendeur 54 emmène cette extrémité 56,58 du fil au moins au niveau du plan médian longitudinal PML du boitier 32.

Pour garantir la qualité et la fiabilité de la découpe de la ceinture 10, il est préférable que le tendeur 54 emmène l'extrémité 56,58 du fil au-dessus du plan médian longitudinal PML du boitier 32. Ainsi, la portion centrale 64 du fil 44 s'étendant au travers du passage traversant 34 traverse complètement l'épaisseur E10 de la ceinture 10.

Afin d'améliorer davantage la qualité et la fiabilité de la découpe de la ceinture 10, les moyens de découpe 42 comprennent deux tendeurs 541,542 situés de part-et d'autre du passage traversant 34 et tirant respectivement sur les deux extrémités 56,58 du fil 44.

En permettant d'attaquer la découpe de la ceinture 10 sur ses deux flancs latéraux F1,F2, cette paire de tendeurs 541,542 diminue les risques de voir les deux morceaux M1,M2 de la ceinture 10 découpés par le fil 44 rester liés le long d'un des flancs F1,F2 de la ceinture 10.

Avantageusement, les deux tendeurs 541,542 maintiennent respectivement les deux extrémités 56,58 du fil 44 au-dessus du plan médian longitudinal PML du boitier 32 aussi bien lorsque le fil 44 est dans l'état actif, que dans l'état passif. On s'assure ainsi que le fil 44 vienne bien en appui sur les éléments thermofusibles 481,482 lorsqu'il est en position passive et que ce fil vienne bien en appui sur les butées 501,502 lorsqu'il est en position active.

Dans un mode de réalisation particulier, les tendeurs 541,542 sont montés mobiles en rotation par rapport à un corps central 62 des moyens de découpe 42 et autour d'axes A1,A2 parallèles au plan médian longitudinal PML.

De plus, les tendeurs 541,542 sont repoussés en permanence vers l'extérieur E du boitier 32 par des moyens de rappel 60 montés entre ce corps central 62 et ces tendeurs 541,542.

Ainsi, lorsque les éléments thermofusibles 481,482 libèrent le fil 44, les extrémités supérieures 721,722 de ces tendeurs 541,542 sont entraînées vers l'extérieur E du boîtier 32, et, par conséquent, la portion centrale 64 du fil 44 est entraînée au niveau du plan médian longitudinal PML et le fil 44 est bien en appui sur les butées 501 ,502.

De préférence, les moyens de rappel 60 prennent la forme de deux goupilles 661,662 montées coulissantes dans deux trous borgnes 681,682 prévus dans le corps central 62 des moyens de découpe 42, et de deux ressorts 701,702 placés dans le fond des trous borgnes 681,682, à l'arrière des goupilles 661,662.

Toujours de préférence, les moyens de chauffage 46 du fil 44 étant électriques, les tendeurs 541,542 sont isolés électriquement des goupilles 661,662 par des inserts 741,742 prévus dans les tendeurs 541,542 à leur point de contact avec ces goupilles 661,662.

Dans la conception des moyens de découpe 42 selon l'invention :
- les éléments thermofusibles 481,482 forment des points d'appui P1,P2 sur le fil 44 situés en-dessous du plan médian longitudinal PML du boitier 32 tant que ces éléments thermofusibles 481,482 ne sont pas soumis à la chaleur du fil 44,
- les butées 501,502 forment des points d'appui P3,P4 sur le fil 44 situés dans le plan médian longitudinal PML du boitier 32 lorsque les éléments thermofusibles 481,482 sont soumis à la chaleur du fil 44, et
- les sommets 761,762 des extrémités supérieures 721,722 des tendeurs 541,542 se situent au-dessus du plan médian longitudinal PML du boitier 32 et au-dessus des points d'appui P1,P2 et P3,P4 formés par les éléments thermofusibles 481,482 et les butées 501,502 aussi bien lorsque le fil 44 est dans son état actif que lorsque le fil 44 est dans son état passif.

Afin de réduire l'encombrement des moyens de découpe 42, les tendeurs 541,542 sont montés à l'extérieur des éléments thermofusibles 481,482 et des butées 501,502.

Et, afin d'éviter un contact entre le matériau en fusion des éléments thermofusibles 481,482 lorsque le fil 44 est chauffé, ces éléments thermofusibles 481,482 sont montés à l'extérieur des butées 501,502.

Dans un mode de réalisation préféré des moyens de découpe 42, la hauteur H34 du passage traversant 34 s'étendant perpendiculairement au plan médian longitudinal PML, et sa largeur L34 s'étendant parallèlement au plan médian longitudinal PML, le fil 44 s'étend parallèlement au plan médian longitudinal PML et dans la largeur L34 du passage traversant 34.

Ainsi, l'épaisseur E10 de la ceinture 10 se situant dans la hauteur H34 du passage traversant 34 et sa largeur L10 se situant dans la largeur L34 du passage traversant 34, le fil 44 se déplace dans la hauteur H34 du passage traversant 34 pour venir en contact avec toute la largeur L10 de la ceinture 10 lorsqu'il est emmené de sa position passive vers sa position active, ce qui favorise la découpe de la ceinture 10.

Etant donné ce positionnement du fil 44 dans la largeur L34 du passage traversant 34, il s'ensuit que les tendeurs 541,542, les éléments thermofusibles 481,482 et les butées 501,502 sont montés de part et d'autre de la largeur L34 du passage traversant 34.

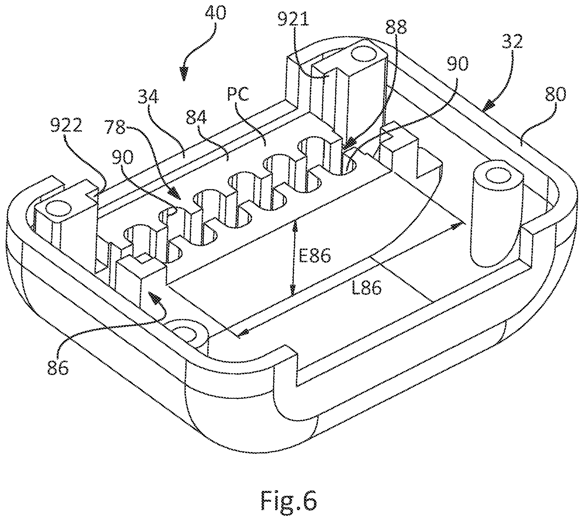

Toujours dans l'objectif d'améliorer la découpe de la ceinture 10 par le fil 44, la face supérieure 78 du passage traversant 34 prend la forme d'un plan de coupe PC visible en figure 6 et vers lequel se dirige le fil 44 lorsqu'il se déplace de sa position passive à sa position active.

Ce plan de coupe PC permet d'éviter que la ceinture 10 ne se dérobe sous l'ascension du fil 44 lorsqu'il est chauffé, et, avec la contribution des butées 501,502, ce plan de coupe PC permet de s'assurer que le fil 44 se positionne sensiblement dans l'épaisseur E10 de la ceinture lorsqu'il est chauffé et qu'il effectue la découpe.

De préférence, ce plan de coupe PC permet de maintenir la ceinture 10 sensiblement dans le plan médian horizontal PML dans lequel se situe le fil 44 en position active.

Avantageusement, le joint transversal 52 permet de plaquer, et même de comprimer, la ceinture 10 contre la surface supérieure 78 du plan de coupe PC lorsque le boitier 32 est fermé et assemblé.

Plus en détails, lors de la fermeture définitive du boitier 32, la ceinture 10 se retrouve pincée entre le joint transversal 52 et la surface supérieure 78, le joint transversal 52 se déformant de manière à créer une pression uniformément répartie sur la ceinture 10.

Grâce à cette déformation et à cette pression du joint 52, la ceinture 10 est sensiblement immobilisée dans le boitier 32, et le boitier 32 reste mobile et réglable en position sur cette ceinture 10.

Le boitier 32 se décomposant en deux demi-parties 80,82 supérieure et inférieure, et assemblées l'une à l'autre le long de leurs bords périphériques, le plan de coupe PC est constitué par la face inférieure 84 d'un bloc 86 solidaire de la demi-partie 80 supérieure du boitier 32, le corps central 62 sur lequel sont montés le fil 44, les tendeurs 541,542, les éléments thermofusibles 481,482 et les butées 501,502 étant solidaire de la demi-partie 82 inférieure du boitier 32.

En vue de limiter la transmission de chaleur du fil 44 en position active vers le bloc 86, et donc vers la demi-partie 80 supérieure du boitier 32, le plan de coupe PC est traversé par une rainure 88 située en face du fil 44.

De préférence, cette rainure 88 est plus large que le fil 44, et, cette rainure 88 est réalisée dans toute l'épaisseur E86 du bloc 86 et sur toute sa largeur L86 susceptible d'être en contact avec le fil 44 en position active.

En complément, et toujours en vue de limiter la transmission de chaleur du fil 44 vers la demi-partie 80 supérieure du boitier 32, le plan de coupe PC comprend des dégagements de matière 90 de part et d'autre de la rainure 88.

Parallèlement, et comme l'illustrent les figures 4 à 6, le bloc 86 comprend des encoches latérales 921 et 922 dans lesquelles viennent se loger les éléments thermofusibles 481,482 et les butées 501,502, ces éléments thermofusibles 481,482 et ces butées 501,502 étant maintenus dans les encoches 921 et 922 par le fil 44 lorsque les deux demi-parties 80,82 supérieure et inférieure du boitier 32 sont assemblées l'une à l'autre.

Selon l'invention, les moyens de chauffage 46 du fil 44 sont électriques et autonomes.

Par autonomes, l'invention entend que ces moyens de chauffage 46 possèdent leur propre alimentation électrique, indépendante de l'alimentation électrique du véhicule.

A cet effet, ces moyens de chauffage 46 comprennent une batterie 94, visible en figure 3, installée dans la demi-partie inférieure 82 du boitier 32, à côté des moyens de découpe 42.

Afin d'alimenter le fil 44, la batterie 94 est reliée au fil 44 par l'intermédiaire des tendeurs 541,542, et plus particulièrement par l'intermédiaire de cosses 961,962 prévues sur les tendeurs et dans lesquelles les extrémités 56,58 du fil 44 sont serties.

Bien entendu, des moyens de commande sont prévus afin d'alimenter le fil 44 avec la batterie 94 uniquement lorsque la ceinture 10 doit être découpée.

Le fil 44 étant de préférence en acier inoxydable, l'invention prévoit d'alimenter, et donc de faire chauffer le fil 44, pendant au moins 25 secondes, ce qui permet d'emmener le fil 44 à une température d'environ 315° Celsius avec une batterie 94 capable de délivrer environ 6000 mAh.

Avec un fil 44 à une telle température, on s'assure que le matériau de la ceinture 10, généralement à base de nylon, fond et se rétracte, ce qui permet de séparer la ceinture 10 en deux morceaux M1 et M2 à coup sûr.

Enfin, dans un mode de réalisation préféré des moyens de découpe 42, les tendeurs 541,542, le corps central 62, les butées 501,502 et les goupilles 661,662 sont fabriquées en matériau métallique, tandis que le boitier 32 est plutôt réalisé dans une matière plastique, c'est-à-dire une matière à base polymérique.

Eventuellement, le dispositif de découpe 30 selon l'invention pourrait aussi être utilisé sur une ceinture de sécurité 10 située ailleurs que dans un véhicule, et par exemple utilisée pour maintenir le corps d'un utilisateur sur une machine, ou sur un harnais de sécurité.

## Revendications

1. Dispositif de découpe (30) d'une ceinture de sécurité (10), le dispositif de découpe (30) comprenant un boitier (32), un passage (34) traversant ce boitier et permettant de monter le dispositif de découpe (30) sur la ceinture (10) à découper, et des moyens de découpe (42) de la ceinture (10) situés à l'intérieur (I) du boitier, lesdits moyens de découpe (42) comprenant un fil (44) et des moyens de chauffage (46) de ce fil, le fil (44) prenant un état passif dans lequel le fil (44) est éloigné de la ceinture (10), et un état actif dans lequel le fil (44) est chauffé par les moyens de chauffage (46) et en contact avec la ceinture (10) afin de la découper, le dispositif de découpe (30) étant **caractérisé en ce que** l'état actif du fil (44) correspond à une position active prise par le fil (44) et différente d'une position passive prise par le fil (44) et correspondant à l'état passif de ce fil (44), le fil (44) est maintenu dans sa position passive par au moins un élément thermofusible (48,481,482), et **en ce que** le fil (44) passe de sa position passive à sa position active lorsque ce fil (44) est chauffé et que le ou les élément(s) thermofusible(s) (48,481,482) fond(ent) au moins en partie sous l'effet de la chaleur du fil (44).

2. Dispositif de découpe (30) d'une ceinture de sécurité (10) selon la revendication précédente, dans lequel, le fil (44) se déplaçant vers la ceinture (10) lorsqu'il passe de sa position passive à sa position active, au moins un élément thermofusible (48,481,482) vient en appui contre le fil (44) de manière à tenir ce fil (44) éloigné de la ceinture (10) lorsque cet(ces) élément(s) thermofusible(s) (48,481,482) n'est(ne sont) pas fondu(s), et ce(ces) élément(s) thermofusible(s) (48,481,482) libérant le fil (44) de manière à ce que le fil (44) se déplace vers la ceinture (10) lorsque cet(ces) élément(s) thermofusible(s) (48,481,482) fond(ent) au moins en partie.

3. Dispositif de découpe (30) d'une ceinture de sécurité (10) selon la revendication précédente, dans lequel deux éléments thermofusibles (481,482) situés de part et d'autre du passage traversant (34) créent respectivement deux points d'appui (P1,P2) sur le fil (44) permettant d'éloigner le fil (44) de la ceinture (10) lorsque ces deux éléments thermofusibles (481,482) ne sont pas fondus.

4. Dispositif de découpe (30) d'une ceinture de sécurité (10) selon la revendication précédente, dans lequel, le passage traversant (34) s'étendant parallèlement à un plan médian longitudinal (PML) du boîtier (32) et sur une hauteur (H341) égale de part et d'autre de ce plan médian longitudinal (PML), les moyens de découpe (42) comprennent deux butées (501,502) situées de part et d'autre du passage traversant (34), respectivement accolées aux éléments thermofusibles (481,482), et créant respectivement deux points d'appui (P3,P4) sur le fil (44), les deux points d'appui (P3,P4) créés par ces deux butées (501,502) permettant d'arrêter le déplacement du fil (44) de manière à maintenir ce fil (44) dans le plan médian longitudinal (PML) du passage traversant (34).

5. Dispositif de découpe (30) d'une ceinture de sécurité (10) selon l'une des revendications 1 à 4, dans lequel le fil (44) est déplacé vers l'état actif par au moins un tendeur (54,541,542) tirant sur une des extrémités (56,58) du fil.

6. Dispositif de découpe (30) d'une ceinture de sécurité (10) selon la revendication précédente, dans lequel les moyens de découpe (42) comprennent deux tendeurs (541,542) situés de part-et d'autre du passage traversant (34) et tirant respectivement sur les deux extrémités (56,58) du fil (44).

7. Dispositif de découpe (30) d'une ceinture de sécurité (10) selon l'une des revendications précédentes, dans lequel, le passage traversant (34) s'étendant parallèlement à un plan médian longitudinal (PML) du boîtier (32) et sur une hauteur (H341) égale de part et d'autre de ce plan médian longitudinal (PML), la hauteur (H34) du passage traversant (34) s'étendant perpendiculairement au plan médian longitudinal (PML), et la largeur (L34) du passage traversant (34) s'étendant parallèlement au plan médian longitudinal (PML), le fil (44) s'étend parallèlement au plan médian longitudinal (PML) et dans la largeur (L34) du passage traversant.

8. Dispositif de découpe (30) d'une ceinture de sécurité (10) selon l'une des revendications 1 à 7, dans lequel la face supérieure (78) du passage traversant (34) prend la forme d'un plan de coupe (PC) vers lequel se dirige le fil (44) lorsqu'il passe de son état passif à son état actif.

9. Dispositif de découpe (30) d'une ceinture de sécurité (10) selon la revendication précédente, dans lequel le plan de coupe (PC) est traversé par une rainure (88) située en face du fil (44).

10. Dispositif de découpe (30) d'une ceinture de sécurité (10) selon la revendication précédente, dans lequel le plan de coupe (PC) comprend des dégagements de matière (90) de part et d'autre de la rainure (88).

11. Dispositif de découpe (30) d'une ceinture de sécurité (10) selon l'une des revendications précédentes, dans lequel les moyens de chauffage (46) du fil (44) sont électriques.

12. Ceinture de sécurité (10), cette ceinture étant **caractérisée en ce qu'**un dispositif de découpe (30) selon l'une des revendications précédentes est monté sur cette ceinture, la ceinture (10) passant dans le passage (34) traversant le boitier (32) du dispositif de découpe.

13. Ceinture de sécurité (10) selon la revendication précédente, le passage (34) traversant permettant de monter le boîtier (32) de manière coulissante sur la ceinture (10), et la ceinture (10) comprenant une boucle (22) destinée à être reliée de manière amovible au châssis (18) du véhicule, ainsi qu'une extrémité (161,162) destinée à être reliée de manière fixe au châssis (18) du véhicule, dans laquelle le dispositif de découpe (30) est positionné entre la boucle (22) et l'extrémité (161,162) de la ceinture (10) reliée de manière fixe au châssis (18) du véhicule.

14. Procédé de découpe d'une ceinture de sécurité (10), dans lequel un fil (44) est utilisé lorsqu'il est chaud afin de découper la ceinture (10) à l'intérieur (I) d'un boitier (32), le procédé étant **caractérisé en ce que** le fil (44) prend un état passif dans lequel le fil (44) est éloigné de la ceinture (10), et un état actif dans lequel le fil (44) est chauffé par des moyens de chauffage (46) et en contact avec la ceinture (10) afin de la découper et **en ce que** l'état actif du fil (44) correspond à une position active prise par le fil (44) et différente d'une position passive prise par le fil (44) et correspondant à l'état passif de ce fil (44), le fil (44) est maintenu dans sa position passive par au moins un élément thermofusible (48,481,482), et dans lequel le fil (44) passe de sa position passive à sa position active lorsque ce fil (44) est chauffé et que le ou les élément(s) thermofusible(s) (48,481,482) fond(ent) au moins en partie sous l'effet de la chaleur du fil (44).

15. Procédé de découpe d'une ceinture de sécurité (10) selon la revendication 14, dans lequel le fil (44) est déplacé vers l'état actif par au moins un tendeur (54,541,542) tirant sur une des extrémités (56,58) du fil.

## Patentansprüche

1. Schneidvorrichtung (30) eines Sicherheitsgurts (10), wobei die Schneidvorrichtung (30) ein Gehäuse (32), einen Durchgang (34), der dieses Gehäuse durchquert und erlaubt, die Schneidvorrichtung (30) auf dem zu schneidenden Gurt (10) anzubringen, und Schneidmittel (42) des Gurts (10) im Inneren (I) des Gehäuses umfasst, wobei die Schneidmittel (42) einen Draht (44) und Erwärmungsmittel (46) dieses Drahts umfassen, wobei der Draht (44) einen passiven Zustand einnimmt, in welchem der Draht (44) von dem Gurt (10) entfernt ist, und einen aktiven Zustand, in welchem der Draht (44) von den Erwärmungsmitteln (46) erwärmt wird und im Kontakt mit dem Gurt (10) ist, um ihn zu schneiden, wobei die Schneidvorrichtung (30) **dadurch gekennzeichnet ist, dass** der aktive Zustand des Drahts (44) einer aktiven Position entspricht, die von dem Draht (44) eingenommen wird und welche sich von einer passiven Position unterscheidet, die von dem Draht (44) eingenommen wird und dem passiven Zustand dieses Drahts (44) entspricht, wobei der Draht (44) in seiner passiven Position von mindestens einem thermisch schmelzbaren Element (48, 481, 482) gehalten wird, und dass der Draht (44) aus seiner passiven Position in seine aktive Position wechselt, wenn dieser Draht (44) erwärmt wird und dass das oder die thermisch schmelzbare(n) Element(e) (48, 481, 482) mindestens teilweise unter der Wirkung der Wärme des Drahts (44) schmilzt/schmelzen.

2. Schneidvorrichtung (30) eines Sicherheitsgurts (10) nach vorangehendem Anspruch, in welcher, der Draht (44) sich zum Gurt (10) verlagernd, wenn er aus seiner passiven Position in seine aktive Position wechselt, sich mindestens ein thermisch schmelzbares Element (48, 481, 482) derart auf dem Draht (44) abstützt, dass dieser Draht (44) entfernt vom Gurt (10) gehalten wird, wenn diese (s) thermisch schmelzbare(n) Element(e) (48, 481, 482) nicht geschmolzen ist/sind, und diese(s) thermisch schmelzbare(n) Element(e) (48, 481, 482) den Draht (44) derart freigeben, dass sich der Draht (44) zum Gurt (10) verlagert, wenn diese(s) thermisch schmelzbare(n) Element(e) (48, 481, 482) mindestens teilweise schmilzt/schmelzen.

3. Schneidvorrichtung (30) eines Sicherheitsgurts (10) nach vorangehendem Anspruch, wobei zwei thermisch schmelzbare Elemente (481, 482), die sich beiderseits eines durchquerenden Durchgangs (34) befinden, jeweils zwei Abstützpunkte (P1, P2) auf dem Draht (44) bilden, die erlauben, den Draht (44) vom Gurt (10) zu entfernen, wenn diese zwei thermisch schmelzbaren Elemente (481, 482) nicht geschmolzen sind.

4. Schneidvorrichtung (30) eines Sicherheitsgurts (10) nach vorangehendem Anspruch, wobei, wobei sich der durchquerende Durchgang (34) parallel zu einer länglichen Mittelebene (PML) des Gehäuses (32) und über eine Höhe (H341) erstreckt, die beiderseits dieser länglichen Mittelebene (PML) gleich ist, die Schneidmittel (42) zwei Anschläge (501, 502) umfassen, die sich beiderseits des durchquerenden Durchgangs (34) befinden, jeweils an den thermisch schmelzbaren Elementen (481, 482) anliegend, und jeweils zwei Abstützpunkte (P3, P4) auf dem Draht (44) bildend, wobei die von diesen zwei Anschlägen (501, 502) gebildeten zwei Abstützpunkte erlauben, die Verlagerung des Drahts (44) derart zu stoppen, dass dieser Draht (44) in der länglichen Mittelebene (PML) des durchquerenden Durchgangs (34) gehalten wird.

5. Schneidvorrichtung (30) eines Sicherheitsgurts (10) nach einem der Ansprüche 1 bis 4, wobei der Draht (44) von mindestens einem Spanner (54, 541, 542), der an einem der Enden (56, 58) des Drahts zieht, in den aktiven Zustand verlagert wird.

6. Schneidvorrichtung (30) eines Sicherheitsgurts (10) nach vorangehendem Anspruch, wobei die Schneidmittel (42) zwei Spanner (541, 542) umfassen, die sich beiderseits des durchquerenden Durchgangs (34) befinden und jeweils an den zwei Enden (56, 58) des Drahts (44) ziehen.

7. Schneidvorrichtung (30) eines Sicherheitsgurts (10) nach einem der vorangehenden Ansprüche, wobei, wobei sich der durchquerende Durchgang (34) parallel zu einer länglichen Mittelebene (PML) des Gehäuses (32) und über eine Höhe (H341) erstreckt, die beiderseits dieser länglichen Mittelebene (PML) gleich ist, sich die Höhe (H34) des durchquerenden Durchgangs (34) senkrecht zur länglichen Mittelebene (PML) erstreckt und sich die Breite (L34) des durchquerenden Durchgangs (34) parallel zur länglichen Mittelebene (PML) erstreckt, sich der Draht (44) parallel zur länglichen Mittelebene (PML) und in der Breite (L34) des durchquerenden Durchgangs erstreckt.

8. Schneidvorrichtung (30) eines Sicherheitsgurts (10) nach einem der Ansprüche 1 bis 7, wobei die obere Fläche (78) des durchquerenden Durchgangs (34) die Form einer Schneidebene (PC) annimmt, zu der sich der Draht (44) bewegt, wenn er aus seinem passiven Zustand in seinen aktiven Zustand wechselt.

9. Schneidvorrichtung (30) eines Sicherheitsgurts (10) nach vorangehendem Anspruch, wobei die Schneidebene (PC) von einer Rille (88) durchquert wird, die sich gegenüber dem Draht (44) befindet.

10. Schneidvorrichtung (30) eines Sicherheitsgurts (10) nach vorangehendem Anspruch, wobei die Schneidebene (PC) beiderseits der Rille (88) Materialaussparungen (90) umfasst.

11. Schneidvorrichtung (30) eines Sicherheitsgurts (10) nach einem der vorangehenden Ansprüche, wobei die Erwärmungsmittel (46) des Drahts (44) elektrisch sind.

12. Sicherheitsgurt (10), wobei dieser Gurt **dadurch gekennzeichnet ist, dass** eine Schneidvorrichtung (30) nach einem der vorangehenden Ansprüche auf diesem Gurt angebracht ist, wobei der Gurt (10) durch den Durchgang (34) läuft, der das Gehäuse (32) der Schneidvorrichtung durchquert.

13. Sicherheitsgurt (10) nach vorangehendem Anspruch, wobei der durchquerende Durchgang (34) erlaubt, das Gehäuse (32) gleitend auf dem Gurt (10) anzubringen, und der Gurt (10) eine Schnalle (22) umfasst, die bestimmt ist, mit dem Fahrgestell (18) des Fahrzeugs lösbar verbunden zu sein, sowie ein Ende (161, 162), das bestimmt ist, mit dem Fahrgestell (18) des Fahrzeugs fest verbunden zu sein, wobei die Schneidvorrichtung (30) zwischen der Schnalle (22) und dem Ende (161, 162) des Gurts (10) positioniert ist, das mit dem Fahrgestell (18) des Fahrzeugs fest verbunden ist.

14. Schneidverfahren eines Sicherheitsgurts (10), wobei ein Draht (44) verwendet wird, wenn er warm ist, um den Gurt (10) im Innern (I) eines Gehäuses (32) zu schneiden, wobei das Verfahren **dadurch gekennzeichnet ist, dass** der Draht (44) einen passiven Zustand einnimmt, in welchem der Draht (44) von dem Gurt (10) entfernt ist, und einen aktiven Zustand, in welchem der Draht (44) von Erwärmungsmitteln (46) erwärmt wird und im Kontakt mit dem Gurt (10) ist, um ihn zu schneiden, und dass der aktive Zustand des Drahts (44) einer aktiven Position entspricht, die von dem Draht (44) eingenommen wird und sich von einer passiven Position unterscheidet, die von dem Draht (44) eingenommen wird und dem passiven Zustand dieses Drahts (44) entspricht, wobei der Draht (44) in seiner passiven Position von mindestens einem thermisch schmelzbaren Element (48, 481, 482) gehalten wird, und wobei der Draht (44) aus seiner passiven Position in seine aktive Position wechselt, wenn dieser Draht (44) erwärmt wird und das oder die thermisch schmelzbare (n) Element(e) (48, 481, 482) mindestens teilweise unter der Wirkung der Wärme des Drahts (44) schmilzt/schmelzen.

15. Schneidverfahren eines Sicherheitsgurts (10) nach Anspruch 14, wobei der Draht (44) von mindestens einem Spanner (54, 541, 542), der an einem der Enden (56, 58) des Drahts zieht, in den aktiven Zustand verlagert wird.

## Claims

1. A cutting device (30) of a safety belt (10), the cutting device (30) comprising a housing (32), a passage (34) going through this housing and allowing the cutting device (30) to be mounted on the belt (10) to be cut, and cutting means (42) of the belt (10) lodged inside (I) the housing, said cutting means (42) comprising a wire (44) and heating means (46) of this wire, the wire (44) assuming a passive state in which the wire (44) is away from the belt (10), and an active state in which the wire (44) is heated by the heating means (46) and in contact with the belt (10) to cut it, the cutting device (30) being **characterized in that** the active state of the wire (44) corresponds to an active position assumed by the wire (44) and different to a passive position assumed by the wire (44) and corresponding to the passive state of this wire (44), the wire (44) is kept in its passive position by at least one hot-melt element (48, 481, 482), and **in that** the wire (44) moves from its passive position to its active position when this wire (44) is heated and the hot-melt element(s) (48, 481, 482) melt(s) at least in part under the effect of the heat of the wire (44).

2. The cutting device (30) of a safety belt (10) according to the preceding claim, wherein the wire (44) moving towards the belt (10) when it transitions from its passive position to its active position, at least one hot-melt element (48, 481, 482) is positioned against the wire (44) so as to hold this wire (44) away from the belt (10) when this (these) hot-melt element (s) (48, 481, 482) is(are) not melted, and this(these) hot-melt element(s) (48, 481, 482) releasing the wire (44) so that the wire (44) moves towards the belt (10) when this(these) hot-melt element(s) (48, 481, 482) melt(s) at least in part.

3. The cutting device (30) of a safety belt (10) according to the preceding claim, wherein two hot-melt elements (481, 482) located on either side of the through passage (34) respectively create two support points (P1, P2) on the wire (44) enabling the wire (44) to be away from the belt (10) when these two hot-melt elements (481, 482) are not melted.

4. The cutting device (30) of a safety belt (10) according to the preceding claim, wherein the through passage (34) extending parallel to a longitudinal median plane (PML) of the housing (32) and over a height (H341) equal on either side of this longitudinal median plane (PML), the cutting means (42) comprise two stops (501, 502) placed on either side of the through passage (34), respectively tight-fitted to the hot-melt elements (481, 482), and creating respectively two support points (P3, P4) on the wire (44), the two support points (P3, P4) created by these two stops (501, 502) allowing to halt the movement of the wire (44) so as to keep this wire (44) in the longitudinal median plane (PML) of the through passage (34).

5. The cutting device (30) of a safety belt (10) according to any one of claims 1 to 4, wherein the wire (44) is moved towards the active state by at least one tensioner (54, 541, 542) pulling on one of the extremities (56, 58) of the wire.

6. The cutting device (30) of a safety belt (10) according to the preceding claim, wherein the cutting means (42) comprise two tensioners (541, 542) placed on either side of the through passage (34) and pulling respectively on the two extremities (56, 58) of the wire (44).

7. The cutting device (30) of a safety belt (10) according to any one of the preceding claims, wherein the through passage (34) extending parallel to a longitudinal median plane (PML) of the housing (32) and over a height (H341) equal on either side of this longitudinal median plane (PML), the height (H34) of the through passage (34) extending perpendicularly to the longitudinal median plane (PML), and the width (L34) of the through passage (34) extending parallel to the longitudinal median plane (PML), the wire (44) extends parallel to the longitudinal median plane (PML) and in the width (L34) of the through passage.

8. The cutting device (30) of a safety belt (10) according to any one of claims 1 to 7, wherein the upper face (78) of the through passage (34) takes the form of a cutting plane (PC) towards which the wire (44) is directed when it moves from its passive state to its active state.

9. The cutting device (30) of a safety belt (10) according to the preceding claim, wherein the cutting plane (PC) is traversed by a groove (88) facing the wire (44).

10. The cutting device (30) of a safety belt (10) according to the preceding claim, wherein the cutting plane (PC) comprises material clearances (90) on either side of the groove (88).

11. The cutting device (30) of a safety belt (10) according to any one of the preceding claims, wherein the heating means (46) of the wire (44) are electrical.

12. Safety belt (10), this belt being **characterized in that** a cutting device (30) according to any one of the preceding claims is mounted on this belt, the belt (10) going through the through passage (34) passing through the housing (32) of the cutting device.

13. The safety belt (10) according to the preceding claim, the through passage (34) allowing to mount the housing (32) to slide on the belt (10), and the belt (10) comprising a loop (22) designed to be connected detachably to the chassis (18) of the vehicle, as well as an extremity (161, 162) designed to be connected in an non-removable way to the chassis (18) of the vehicle, wherein the cutting device (30) is positionned between the loop (22) and the extremity (161, 162) of the belt (10) connected in an non-removable way to the chassis (18) of the vehicle.

14. A process for cutting a safety belt (10), wherein a wire (44) is used when it is hot to cut the belt (10) inside (I) a housing (32), the process being **characterized in that** the wire (44) assumes a passive state, in which the wire (44) is away from the belt (10), and an active state in which the wire (44) is heated by heating means (46) and in contact with the belt (10) to cut it and **in that** the active state of the wire (44) corresponds to an active position assumed by the wire (44) and different to a passive position assumed by the wire (44) and corresponding to the passive state of this wire (44), the wire (44) is held in its passive position by at least one hot-melt element (48, 481, 482), and wherein the wire (44) moves from its passive position to its active position when this wire (44) is heated and the hot-melt element(s) (48, 481, 482) melt(s) at least in part under the effect of the heat of the wire (44).

15. A process for cutting a safety belt (10) according to claim 14, wherein the wire (44) is moved towards the active state by at least one tensioner (54, 541, 542) pulling on one of the extremities (56, 58) of the wire.
